# EUROPEAN PATENT APPLICATION

(11) **EP 4 489 424 A1**
(43) Date of publication of application: **08.01.2025**
(21) Application number: 22929704.9
(22) Date of filing: 01.03.2022
(51) Int. Cl.: H04N 23/70

(54) **INFORMATION PROCESSING SYSTEM, INFORMATION PROCESSING METHOD, AND RECORDING MEDIUM**

(71) Applicant: NEC Corporation, 108-8001 Tokyo (JP)
(72) Inventor: FUNAYAMA, Chisato, Tokyo 108-8001 (JP); TSUKADA, Masato, Tokyo 108-8001 (JP)
(74) Representative: Betten & Resch
(86) International application number: PCT/JP2022/008596
(87) International publication number: WO 2023/166556

(57) **Abstract**

An information processing system includes: a reference image acquiring unit that acquires a reference image; a bracketing unit that controls a camera to perform bracketing based on the reference image; a histogram acquiring unit that acquires a histogram of the reference image; and an additional imaging unit that controls the camera to perform additional imaging with a set value different from that of the bracketing imaging, on the basis of the histogram of the reference image. According to such an information processing system, it is possible to capture an appropriate image, regardless of an imaging environment.

## Description

### Technical Field

This disclosure relates to technical fields of an information processing system, an information processing method, and a recording medium.

### Background Art

When an image is captured, brightness may be adjusted or corrected in accordance with an imaging environment, thereby capturing an image with appropriate brightness. For example, Patent Literature 1 discloses that backlight correction processing is performed on an image signal by performing gradation in accordance with a spatial position on an image. Patent Literature 2 discloses that a control parameter is estimated on the basis of brightness in a photometric range, and that an input f image of a camera is adjusted on the basis of the control parameter. Patent Literature 3 discloses that a distribution of time variation in brightness information in a local area obtained by dividing an image is obtained, and that an input image of an imaging unit is adjusted.

As another related technology/technique, Patent Literature 4 discloses that a luminance histogram of image data is generated and that it is determined from a histogram shape whether or not light is backlight.

### Citation List

### Patent Literature

Patent Literature 1: JP2009-089357A
Patent Literature 2: JP2009-059073A
Patent Literature 3: JP2009-044526A
Patent Literature 4: JP2009-230556A

### Summary

### Technical Problem

This disclosure aims to improve the techniques/technologies disclosed in Citation List.

### Solution to Problem

An information processing system according to an example aspect of this disclosure includes: a reference image acquiring unit that acquires a reference image; a bracketing unit that controls a camera to perform bracketing based on the reference image; a histogram acquiring unit that acquires a histogram of the reference image; and an additional imaging unit that controls the camera to perform additional imaging with a set value different from that of the bracketing imaging, on the basis of the histogram of the reference image.

An information processing method according to an example aspect of this disclosure includes: acquiring a reference image; controlling a camera to perform bracketing based on the reference image; acquiring a histogram of the reference image; and controlling the camera to perform additional imaging with a set value different from that of the bracketing imaging, on the basis of the histogram of the reference image.

A recording medium according to an example aspect of this disclosure is a recording medium on which a computer program that allows at least one computer to execute an information processing method is recorded, the information processing method including: acquiring a reference image; controlling a camera to perform bracketing based on the reference image; acquiring a histogram of the reference image; and controlling the camera to perform additional imaging with a set value different from that of the bracketing imaging, on the basis of the histogram of the reference image.

### Brief Description of Drawings

[FIG. 1] FIG. 1 is a block diagram illustrating a hardware configuration of an information processing system according to a first example embodiment.
[FIG. 2] FIG. 2 is a block diagram illustrating a functional configuration of the information processing system according to the first example embodiment.
[FIG. 3] FIG. 3 is a flowchart illustrating a flow of operation of the information processing system according to the first example embodiment.
[FIG. 4] FIG. 4 is a block diagram illustrating a functional configuration of an information processing system according to a second example embodiment.
[FIG. 5] FIG. 5 is a flowchart illustrating a flow of operation of the information processing system according to the second example embodiment.
[FIG. 6] FIG. 6 is a conceptual diagram illustrating a backlight determination method in an information processing system according to a third example embodiment.
[FIG. 7] FIG. 7 is a flowchart illustrating a flow of operation of an information processing system according to a fourth example embodiment.
[FIG. 8] FIG. 8 is a flowchart illustrating a flow of operation of an information processing system according to a fifth example embodiment.
[FIG. 9] FIG. 9 is a block diagram illustrating a functional configuration of an information processing system according to a sixth example embodiment.
[FIG. 10] FIG. 10 is a flowchart illustrating a flow of operation of the information processing system according to the sixth example embodiment.
[FIG. 11] FIG. 11 is a block diagram illustrating a functional configuration of an information processing system according to a modified example of the sixth example embodiment.
[FIG. 12] FIG. 12 is a flowchart illustrating a flow of operation of the information processing system according to the modified example of the sixth example embodiment.
[FIG. 13] FIG. 13 is a block diagram illustrating a functional configuration of an information processing system according to a seventh example embodiment.
[FIG. 14] FIG. 14 is a flowchart illustrating a flow of operation of the information processing system according to the seventh example embodiment.
[FIG. 15] FIG. 15 is a block diagram illustrating a functional configuration of an information processing system according to an eighth example embodiment.
[FIG. 16] FIG. 16 is a flowchart illustrating a flow of operation of the information processing system according to the eighth example embodiment.
[FIG. 17] FIG. 17 is a block diagram illustrating a functional configuration of an information processing system according to a ninth example embodiment.
[FIG. 18] FIG. 18 is a flowchart illustrating a flow of operation of the information processing system according to the ninth example embodiment.
[FIG. 19] FIG. 19 is a block diagram illustrating a functional configuration of an information processing system according to a tenth example embodiment.
[FIG. 20] FIG. 20 is a flowchart illustrating a flow of operation of the information processing system according to the tenth example embodiment.
[FIG. 21] FIG. 21 is a block diagram illustrating a functional configuration of an information processing system according to an eleventh example embodiment.
[FIG. 22] FIG. 22 is a flowchart illustrating a flow of operation of the information processing system according to the eleventh example embodiment.

### Description of Example Embodiments

Hereinafter, an information processing system, an information processing method, and a recording medium according to example embodiments will be described with reference to the drawings.

### <First Example Embodiment>

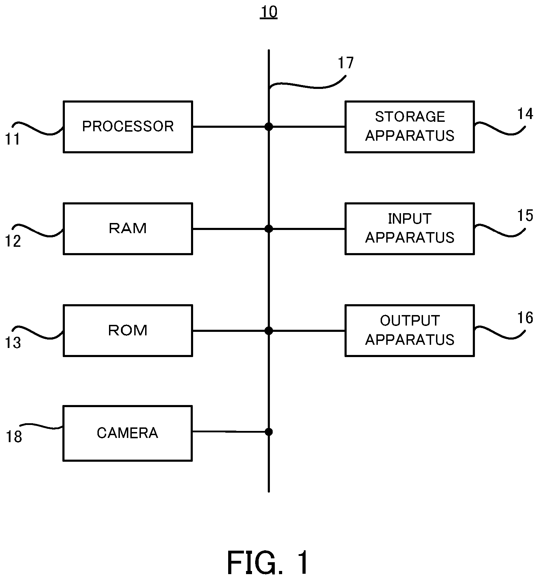

An information processing system according to a first example embodiment will be described with reference to FIG. 1 to FIG. 3.

### (Hardware Configuration)

First, a hardware configuration of the information processing system according to the first example embodiment will be described with reference to FIG. 1. FIG. 1 is a block diagram illustrating the hardware configuration of the information processing system according to the first example embodiment.

As illustrated in FIG. 1, an information processing system 10 according to the first example embodiment includes a processor 11, a RAM (Random Access Memory) 12, a ROM (Read Only Memory) 13, and a storage apparatus 14. The information processing system 10 may further include an input apparatus 15 and an output apparatus 16. Furthermore, the information processing system 10 includes a camera 18. The processor 11, the RAM 12, the ROM 13, the storage apparatus 14, the input apparatus 15, the output apparatus 16, and the cameras 18 are connected through a data bus 17.

The processor 11 reads a computer program. For example, the processor 11 is configured to read a computer program stored by at least one of the RAM 12, the ROM 13 and the storage apparatus 14. Alternatively, the processor 11 may read a computer program stored in a computer-readable recording medium, by using a not-illustrated recording medium reading apparatus. The processor 11 may acquire (i.e., may read) a computer program from a not-illustrated apparatus disposed outside the information processing system 10, through a network interface. The processor 11 controls the RAM 12, the storage apparatus 14, the input apparatus 15, and the output apparatus 16 by executing the read computer program. Especially in the present example embodiment, when the processor 11 executes the read computer program, a functional block for capturing an image of a target is realized or implemented in the processor 11. That is, the processor 11 may function as a controller for executing each control of the information processing system 10.

The processor 11 may be configured as, for example, a CPU (Central Processing Unit), a GPU (Graphics Processing Unit), a FPGA (Field-Programmable Gate Array), a DSP (Demand-Side Platform), or an ASIC (Application Specific Integrated Circuit). The processor 11 may be one of them, or may use a plurality of them in parallel.

The RAM 12 temporarily stores the computer program to be executed by the processor 11. The RAM 12 temporarily stores the data that are temporarily used by the processor 11 when the processor 11 executes the computer program. The RAM12 may be, for example, a D-RAM (Dynamic Random Access Memory) or a SRAM (Static Random Access Memory). Furthermore, another type of volatile memory may also be used instead of the RAM12.

The ROM 13 stores the computer program to be executed by the processor 11. The ROM 13 may otherwise store fixed data. The ROM13 may be, for example, a P-ROM (Programmable Read Only Memory) or an EPROM (Erasable Read Only Memory). Furthermore, another type of non-volatile memory may also be used instead of the ROM13.

The storage apparatus 14 stores data that are stored by the information processing system 10 for a long time. The storage apparatus 14 may operate as a temporary/transitory storage apparatus of the processor 11. The storage apparatus 14 may include, for example, at least one of a hard disk apparatus, a magneto-optical disk apparatus, a SSD (Solid State Drive), and a disk array apparatus.

The input apparatus 15 is an apparatus that receives an input instruction from a user of the information processing system 10. The input apparatus 15 may include, for example, at least one of a keyboard, a mouse, and a touch panel. The input apparatus 15 may be configured as a portable terminal such as a smartphone and a tablet. The input apparatus 15 may be an apparatus that allows audio input/voice input, including a microphone, for example.

The output apparatus 16 is an apparatus that outputs information about the information processing system 10 to the outside. For example, the output apparatus 16 may be a display apparatus (e.g., a display) that is configured to display the information about the information processing system 10. The output apparatus 16 may be a speaker or the like that is configured to audio-output the information about the information processing system 10. The output apparatus 16 may be configured as a portable terminal such as a smartphone and a tablet. The output apparatus 16 may be an apparatus that outputs information in a form other than an image. For example, the output apparatus 16 may be a speaker that audio-outputs the information about the information processing system 10.

The camera 18 is configured to capture the image of the target. The target herein is not limited to a human being, but may include an animal such as a dog, a cat, a snake, and a bird, and a robot, or the like. The camera 18 may capture an entire image of the target, or may image a part of the target. For example, the camera 18 may capture an image of a face of the target, or may capture an image including an eye (iris) of the target. The camera 18 may be configured as a visible light camera or as a near infrared camera. The camera 18 may be a camera that captures a still image, or a camera that captures a video. Furthermore, a plurality of cameras 18 may be provided. For example, the camera 18 may have a function of automatically turning off in a case where the camera 19 does not capture an image. In this case, for example, a part having a short life such as a liquid lens and a motor, may be preferentially turned off.

Although FIG. 1 illustrates an example of the imaging system 10 including a plurality of apparatuses, all or a part of the functions thereof may be realized or implemented with a single apparatus (information processing apparatus). The information processing apparatus may include only the processor 11, the RAM 12, the ROM 13, and the camera 18, and the other components (i.e., the storage apparatus 14, the input apparatus 15, and the output apparatus 16) may be provided in an external apparatus connected to the information processing apparatus, for example. In addition, in the information processing apparatus, a part of an arithmetic function may be realized by an external apparatus (e.g., an external server or cloud, etc.).

### (Functional Configuration)

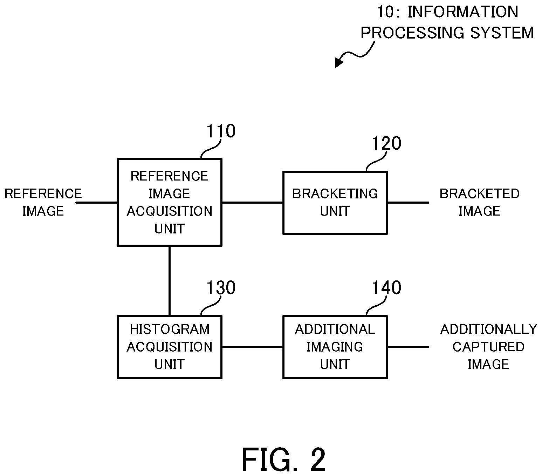

Next, a functional configuration of the information processing system 10 according to the first example embodiment will be described with reference to FIG. 2. FIG. 2 is a block diagram illustrating the functional configuration of the information processing system according to the first example embodiment.

The information processing system 10 according to the first example embodiment is configured as a system that captures the image of the target. The application of the image captured by the information processing system 10 is not particularly limited, but the image may be used in biometric authentication, for example. For example, the information processing system 10 may be configured as a part of an authentication system that image the target and performs the biometric authentication.

As illustrated in FIG. 2, the information processing system 10 according to the first example embodiment includes, as components for realizing the functions thereof, a reference image acquisition unit 110, a bracketing unit 120, a histogram acquisition unit 130, and an additional imaging unit 140. Each of the reference image acquisition unit 110, the bracketing unit 120, the histogram acquisition unit 130, and the additional imaging unit 140 may be a processing block realized or implemented by the processor 11 (see FIG. 1), for example.

The reference image acquisition unit 110 is configured to acquire a reference image for bracketing. The "bracketing" is a technique for capturing a plurality of images under different conditions, while controlling (changing) a camera parameter such as exposure. The reference image acquisition unit 110 may control the camera 18 to acquire the reference image before the bracketing. The reference image may be captured by setting a camera set value (i.e., various camera parameters) to a preset value. For example, the reference image may be captured in a condition that average pixel luminance of a region of interest (ROI) has a designation value. An imaging condition for the reference image may be changed in accordance with brightness of an imaging place or a time zone, for example.

The bracketing unit 120 is configured to control the camera 18 to perform bracketing, on the basis of the reference image acquired by the reference image acquisition unit 110. The bracketing may be performed while shifting the sett value of the camera 18 little by little in a direction in which the image becomes brighter or darker, on the basis of the reference image, for example. The number of images captured by the bracketing is not particularly limited.

The histogram acquisition unit 130 is configured to acquire a histogram of the reference image (i.e., a luminance distribution of the reference image) by analyzing the reference image. A detailed description of a specific method of acquiring the histogram from the reference image is omitted here, as the existing technologies/techniques may be applied accordingly.

The additional imaging unit 140 is configured to control the camera 18 to perform additional imaging, on the basis of the histogram of the reference image acquired by the histogram acquisition unit 130. Specifically, the additional imaging unit 140 first sets the set value of the camera 18 to a value different from that of the bracketing imaging (hereinafter referred to as an "additional imaging set value" as appropriate), on the basis of the histogram of the reference image. The additional imaging unit 140 then performs the additional imaging with the set additional imaging set value. The additional imaging set value may be set as a value that allows a clearer/sharper image, in view of the histogram of the reference image.

### (Flow of Operation)

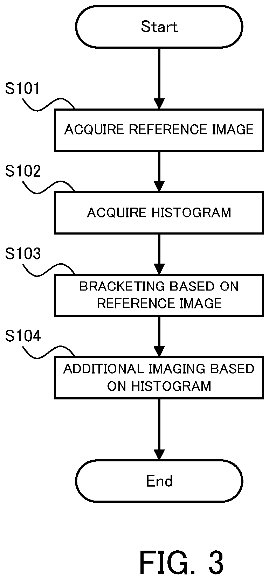

Next, a flow of operation of the information processing system 10 according to the first example embodiment will be described with reference to FIG. 3. FIG. 3 is a flowchart illustrating a flow of an imaging operation of the information processing system according to the first example embodiment.

As illustrated in FIG. 3, when the operation by the information processing system 10 according to the first example embodiment is started, first, the reference image acquisition unit 110 acquires the reference image (step S101). The reference image acquisition unit 110 may acquire the reference image in the timing when the target arrives at a predetermined trigger point, for example. The reference image acquired by the reference image acquisition unit 110 is outputted to the bracketing unit 120 and the histogram acquisition unit 130.

Subsequently, the histogram acquisition unit 130 analyzes the reference image acquired by the reference image acquisition unit 110 and acquires the histogram of the reference image (step S102). The histogram of the reference image acquired by the histogram acquisition unit 130 is outputted to the additional imaging unit 140.

Subsequently, the bracketing unit 140 controls the camera 18 to perform the bracketing on the basis of the reference image acquired by the reference image acquisition unit 110 (step S103). The additional imaging unit 140 performs the additional imaging on the basis of the histogram of the reference image acquired by the histogram acquisition unit 130 (step S104). In the additional imaging, a plurality of images may be captured.

The additional imaging in the step S104 may be omitted, as appropriate, depending on the situations. For example, in a case where it can be determined that the additional imaging does not need to be performed (in other words, only the bracketing is sufficient), the additional imaging may not be performed. A configuration of omitting the additional imaging as appropriate, as described above, will be described in detail in another example embodiment later.

By a series of operation steps described above, the image captured by the bracketing (hereinafter referred to as a "bracketed image" as appropriate) and the image captured by the additional imaging (hereinafter referred to as an "additionally captured image" as appropriate) are acquired. The bracketed image and the additionally captured image may be used in biometric authentication, for example. The information processing system 10 according to the present example embodiment may have a function of performing such biometric authentication processing. The information processing system 10 may have a function for performing various types of processing (e.g., processing of unlocking a gate) in accordance with a result of the biometric authentication processing.

### (Technical Effect)

Next, a technical effect obtained by the information processing system 10 according to the first example embodiment will be described.

As described in FIG. 1 to FIG. 3, in the information processing system 10 according to the first example embodiment, the bracketing based on the reference image is performed, and the additional imaging based on the histogram of the reference image is performed. In this way, even in a case where the bracketing alone is not sufficient to capture an appropriate image (e.g., in a case where the image is blackened or underexposed (or crashed shadows) due to an imaging environment), it is possible to capture an appropriate image by the additional imaging.

### <Second Example Embodiment>

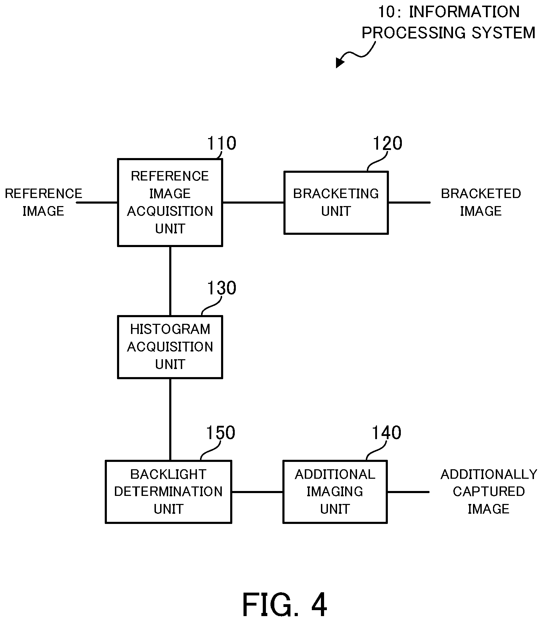

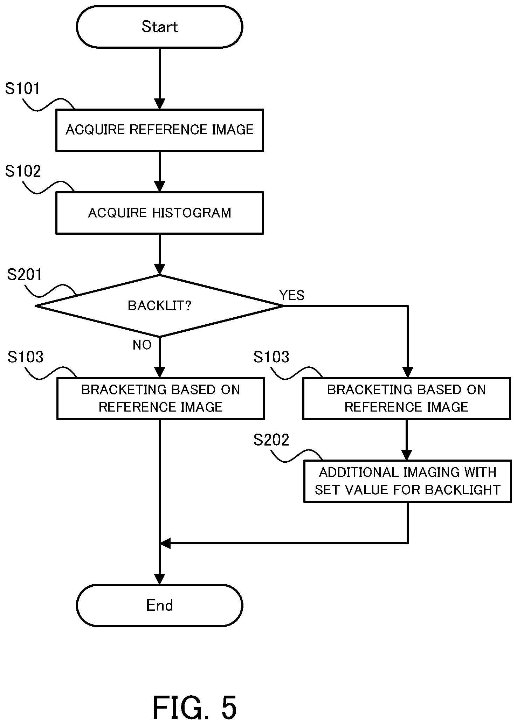

The information processing system 10 according to a second example embodiment will be described with reference to FIG. 4 and FIG. 5. The second example embodiment is partially different from the first example embodiment only in the configuration and operation, and may be the same as the first example embodiment in the other parts. For this reason, a part that is different from the first example embodiment will be described in detail below, and a description of the other overlapping parts will be omitted as appropriate.

### (Functional Configuration)

First, a functional configuration of the information processing system 10 according to the second example embodiment will be described with reference to FIG. 4. FIG. 4 is a block diagram illustrating the functional configuration of the information processing system according to the second example embodiment. In FIG. 4, the same components as those illustrated in FIG. 2 carry the same reference numerals.

As illustrated in FIG. 4, the information processing system 10 according to the second example embodiment includes, as components for realizing the functions thereof, the reference image acquisition unit 110, the bracketing unit 120, the histogram acquisition unit 130, the additional imaging unit 140, and a backlight determination unit 150. That is, the information processing system 10 according to the second example embodiment further includes the backlight determination unit 150 in addition to the configuration in the first example embodiment already described (see FIG. 2). The backlight determination unit 150 may be a processing block realized or implemented by the processor 11 (see FIG. 1), for example.

The backlight determining unit 150 is configured to determine whether or not the imaging environment is backlit, on the basis of the histogram of the reference image acquired by the histogram acquisition unit 130. A specific method of determining the backlight using the histogram will be described in detail in another example embodiment later. A determination result of the backlight determination unit 150 is configured to be outputted to the additional imaging unit 140. Therefore, the additional imaging unit 140 according to the second example embodiment performs the additional imaging in view of the determination result of the backlight determining unit 150.

### (Flow of Operation)

Next, a flow of operation of the information processing system 10 according to the second example embodiment will be described with reference to FIG. 5. FIG. 5 is a flowchart illustrating a flow of an imaging operation of the information processing system according to the second example embodiment. In FIG. 5, the same steps as those illustrated in FIG. 3 carry the same reference numerals.

As illustrated in FIG. 5, when the operation by the information processing system 10 according to the second example embodiment is started, first, the reference image acquisition unit 110 acquires the reference image (step S101). The reference image acquired by the reference image acquisition unit 110 is outputted to the bracketing unit 120 and the histogram acquisition unit 130.

Subsequently, the histogram acquisition unit 130 analyzes the reference image acquired by the reference image acquisition unit 110 and acquires the histogram of the reference image (step S102). The histogram of the reference image acquired by the histogram acquisition unit 130 is outputted to the backlight determination unit 150.

Subsequently, the backlight determination unit 150 determines whether or not the imaging environment is backlit on the basis of the histogram of the reference image acquired by the histogram acquisition unit 130 (step S201). The determination result of the backlight determination unit 150 is outputted to the additional imaging unit 140.

When it is determined that the imaging environment is not backlit (the step S201: NO), the additional imaging unit 140 does not perform the additional imaging. Therefore, in this case, the bracketing unit 120 controls the camera 18 to perform the bracketing on the basis of the reference image acquired by the reference image acquisition unit 110 (step S103). Then, a series of operation steps is ended.

On the other hand, when it is determined that the imaging environment is backlit (the step S201: YES), the additional imaging unit 140 performs the additional imaging. Therefore, in this case, first, the bracketing unit 120 controls the camera 18 to perform the bracketing on the basis of the reference image acquired by the reference image acquisition unit 110 (step S103). Then, the additional imaging unit 140 performs the additional imaging with a set value for backlight (step S202). The "set value for backlight" herein is an additional imaging set value that is set such that an appropriate image can be captured even when the imaging environment is backlit.

### (Technical Effect)

Next, a technical effect obtained by the information processing system 10 according to the second example embodiment will be described.

As described in FIG. 4 and FIG. 5, in the information processing system 10 according to the second example embodiment, the additional imaging is performed when it is determined that the imaging environment is backlit. In this way, even in a situation where it is hard to properly capture an image due to backlight, an appropriate image may be captured by the additional imaging. In addition, since the additional imaging is not performed when it is not backlit, it is possible to reduce a processing burden, as compared with when the additional imaging is performed at all times.

### <Third Example Embodiment>

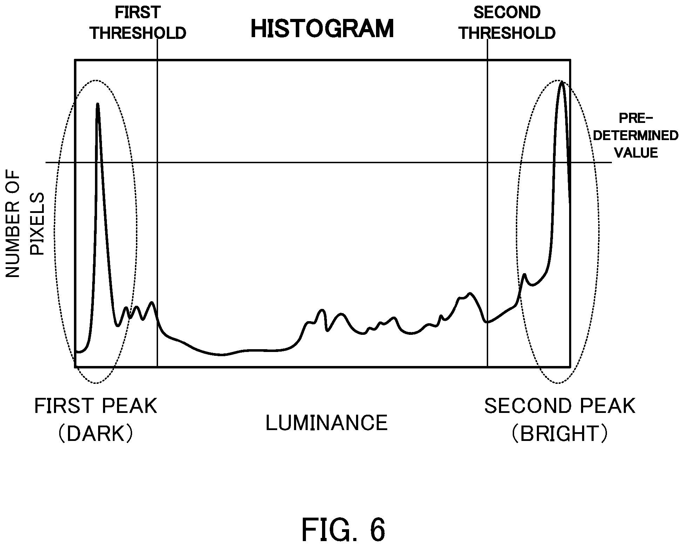

The information processing system 10 according to a third example embodiment will be described with reference to FIG. 6. The third example embodiment specifically describes the backlight determination method in the second example embodiment described above, and may be the same as the first and second example embodiments in the other parts. For this reason, a part that is different from each of the example embodiments described above will be described in detail below, and a description of the other overlapping parts will be omitted as appropriate.

### (Backlight Determination)

First, the backlight determination by the information processing system 10 according to the third example embodiment will be specifically described with reference to FIG. 6. FIG. 6 is a conceptual diagram illustrating the backlight determination method in the information processing system according to the third example embodiment. A horizontal axis of the histogram illustrated in FIG. 6 is luminance (Pixel Value), and a vertical axis is the number of pixels.

In the information processing system 10 according to the third example embodiment, the backlight determination unit 150 (see FIG. 4) determines whether or not the imaging environment is backlit, on the basis of the histogram of the reference image acquired by the histogram acquisition unit 130. Specifically, the backlight determination unit 150 determines whether or not the imaging environment is backlit, depending on whether or not there are two or more peaks whose value is greater than or equal to a predetermined value, in the histogram of the reference image. The "predetermined value" herein is a threshold for determining a peak generated in the histogram in the backlight, and an appropriate value may be determined in advance.

For example, let us assume that the histogram as illustrated in FIG. 6 is acquired by the histogram acquisition unit 130. In this histogram, there is a large peak where it is darker than a first threshold (i.e., where a luminance value is lower than the first threshold), and there is a large peak where it is brighter than a second threshold (i.e., where the luminance value is higher than the second threshold) (i.e., there are two peaks whose value is greater than or equal to the predetermined value). Therefore, in a case where such a histogram is acquired, the backlight determination unit 150 determines that the imaging environment is backlit. The first threshold and the second threshold may be set as the same value. Alternatively, instead of the first threshold and the second threshold, one common threshold may be set. In this case, it may be determined whether or not there is a peak where it is darker than the common threshold, and whether or not there is a peak where it is brighter than the common threshold.

### (Technical Effect)

Next, a technical effect obtained by the information processing system 10 according to the third example embodiment will be described.

As described in FIG. 6, in the information processing system 10 according to the third example embodiment, the backlight determination is performed by detecting a peak in the histogram. In this way, it is possible to properly determine whether or not the imaging environment is backlit, by using the histogram of the reference image.

### <Fourth Example Embodiment>

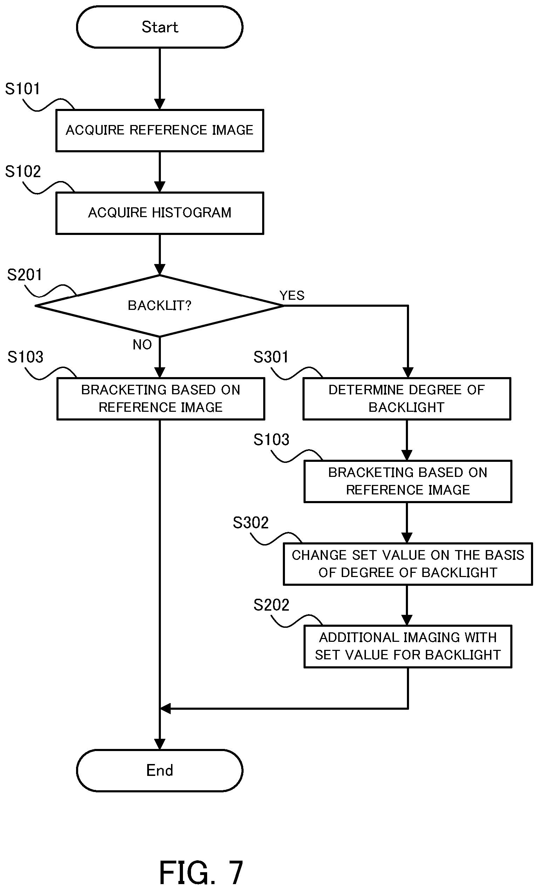

The information processing system 10 according to a fourth example embodiment will be described with reference to FIG. 7. The fourth example embodiment is partially different from first to third example embodiments only in the operation, and may be the same as the first to third example embodiments in the other parts. For this reason, a part that is different from each of the example embodiments described above will be described in detail below, and a description of the other overlapping parts will be omitted as appropriate.

### (Flow of Operation)

First, a flow of operation of the information processing system 10 according to the fourth example embodiment will be described with reference to FIG. 7. FIG. 7 is a flowchart illustrating a flow of an imaging operation of the information processing system according to the fourth example embodiment. In FIG. 7, the same steps as those illustrated in FIG. 5 carry the same reference numerals.

As illustrated in FIG. 7, when the operation by the information processing system 10 according to the fourth example embodiment is started, first, the reference image acquisition unit 110 acquires the reference image (step S101). The reference image acquired by the reference image acquisition unit 110 is outputted to the bracketing unit 120 and the histogram acquisition unit 130.

Subsequently, the histogram acquisition unit 130 analyzes the reference image acquired by the reference image acquisition unit 110 and acquires the histogram of the reference image (step S102). The histogram of the reference image acquired by the histogram acquisition unit 130 is outputted to the backlight determination unit 150.

Subsequently, the backlight determination unit 150 determines whether or not the imaging environment is backlit on the basis of the histogram of the reference image acquired by the histogram acquisition unit 130 (step S201). The determination result of the backlight determination unit 150 is outputted to the additional imaging unit 140.

When it is determined that the imaging environment is not backlit (the step S201: NO), the additional imaging unit 140 does not perform the additional imaging. Therefore, in this case, the bracketing unit 120 controls the camera 18 to perform the bracketing on the basis of the reference image acquired by the reference image acquisition unit 110 (step S103). Then, a series of operation steps is ended.

On the other hand, when it is determined that the imaging environment is backlit (the step S201: YES), the backlight determination unit 150 further determines a degree of backlight (step S301). The degree of backlight may be determined on the basis of the histogram of the reference image. For example, it may be determined in accordance with a height and a width of the peak described in the third example embodiment (see FIG. 6), a difference between the peak and a part other than the peak, or the like. Alternatively, the degree of backlight may be determined in accordance with a time zone in the imaging (the imaging environment in each time zone may be investigated in advance). A reference value for determining whether or not it is backlit (e.g., a value to be compared with the peak) may be changed in accordance with the imaging environment or the time zone. For example, when a value in the imaging environment is brighter than the predetermined value, the reference value for determining that it is backlit may be increased (the height of the peak in which it is determined to be backlit may be increased). In addition, when the value in the imaging environment is darker than the predetermined value, the reference value for determining that it is backlit may be lowered (the height of the peak in which it is determined to be backlit may be lowered). The degree of backlight determined by the backlight determining unit 150 is outputted to the additional imaging unit 140.

Thereafter, first, the bracketing unit 120 controls the camera 18 to perform the bracketing on the basis of the reference image acquired by the reference image acquisition unit 110 (step S103). On the other hand, the additional imaging unit 140 changes the set value for backlight in accordance with the degree of backlight determined by the backlight determining unit 150 (step S302). For example, the additional imaging unit 140 changes the set value such that the image is brighter (such that the image is not blackened or underexposed (or crashed shadows)) as the degree of backlight is higher. Then, the additional imaging unit 140 performs the additional imaging, with the set value for backlight changed in accordance with the degree of backlight (step S202).

### (Technical Effect)

Next, a technical effect obtained by the information processing system 10 according to the fourth example embodiment will be described.

As described in FIG. 7, in the information processing system 10 according to the fourth example embodiment, the degree of backlight is determined, and the set value of the additional imaging is changed on the basis of the degree of backlight. In this way, since the additional imaging is performed at the set value corresponding to the degree of backlight, it is possible to capture an appropriate image, as compared with when the additional imaging is performed at the same set value at all times, for example.

### <Fifth Example Embodiment>

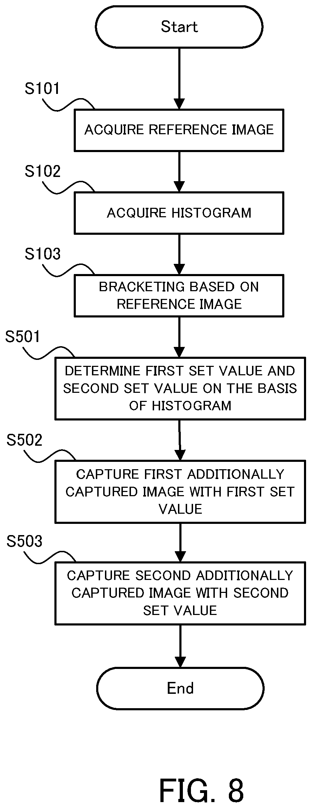

The information processing system 10 according to a fifth example embodiment will be described with reference to FIG. 8. The fifth example embodiment is partially different from the first to fourth example embodiments only in the configuration and operation, and may be the same as the first to fourth example embodiments in the other parts. For this reason, a part that is different from each of the example embodiments described above will be described in detail below, and a description of the other overlapping parts will be omitted as appropriate.

### (Flow of Operation)

First, a flow of operation of the information processing system 10 according to the fifth example embodiment will be described with reference to FIG. 8. FIG. 8 is a flowchart illustrating a flow of an imaging operation of the information processing system according to the fifth example embodiment. In FIG. 8, the same steps as those illustrated in FIG. 2 carry the same reference numerals.

As illustrated in FIG. 8, when the operation by the information processing system 10 according to the fifth example embodiment is started, first, the reference image acquisition unit 110 acquires the reference image (step S101). The reference image acquired by the reference image acquisition unit 110 is outputted to the bracketing unit 120 and the histogram acquisition unit 130.

Subsequently, the histogram acquisition unit 130 analyzes the reference image acquired by the reference image acquisition unit 110 and acquires the histogram of the reference image (step S102). The histogram of the reference image acquired by the histogram acquisition unit 130 is outputted to the additional imaging unit 140.

Subsequently, the bracketing unit 140 controls the camera 18 to perform the bracketing on the basis of the reference image acquired by the reference image acquisition unit 110 (step S103).

Subsequently, especially in the fifth example embodiment, the additional imaging unit 140 determines a first set value and a second set value, which are the additional imaging set values, on the basis of the histogram of the reference image acquired by the histogram acquisition unit 130 (step S501). The first set value and the second set value are different from each other. The first set value and the second set value may be determined as values having a predetermined difference from each other. For example, the second set value may be determined by adding a predetermined value to the first set value. Alternatively, the second set value may be determined by subtracting a predetermined value from the first set value.

Then, the additional imaging unit 140 performs the additional imaging with the first set value, and acquires a first additionally captured image (step S502). Furthermore, the additional imaging unit 140 performs the additional imaging with the second set value, and acquires a second additionally captured image (step S503). As a result, in the fifth example embodiment, the first additionally captured image and the second additionally captured image are acquired as a result of the additional imaging in differing conditions.

**In** a case where the first additionally captured image that is additionally captured with the first set value is not appropriate, the additional imaging may be performed with the second set value. In other words, in a case where the first additionally captured image that is additionally captured with the first set value is appropriate, the additional imaging with the second set value may not be performed. Furthermore, an example in which the additional imaging is performed twice is described here, but the additional imaging may be performed three or more times. Specifically, a third additionally captured image may be acquired by the additional imaging with a third set value, and a fourth additionally captured image may be acquired by the additional imaging with a fourth set value. Alternatively, in a case where the first additionally captured image is not appropriate, the bracketing (i.e., second bracketing, where the step S103 is assumed to be first bracketing) may be performed again. In the second bracketing, the reference image may be changed on the basis of the first set value (i.e., the value when the first additionally captured image is captured), or the number of images, a correction range, or the like may be changed on the basis of the first set value.

### (Technical Effect)

Next, a technical effect obtained by the information processing system 10 according to the fifth example embodiment will be described.

As described in FIG. 8, in the information processing system 10 according to the fifth example embodiment, the additional imaging is performed multiple times with different set values. In this way, even in a case where an appropriate image cannot be captured in one additional imaging, it is possible to capture an appropriate image by the subsequent additional imaging.

### <Sixth Example Embodiment>

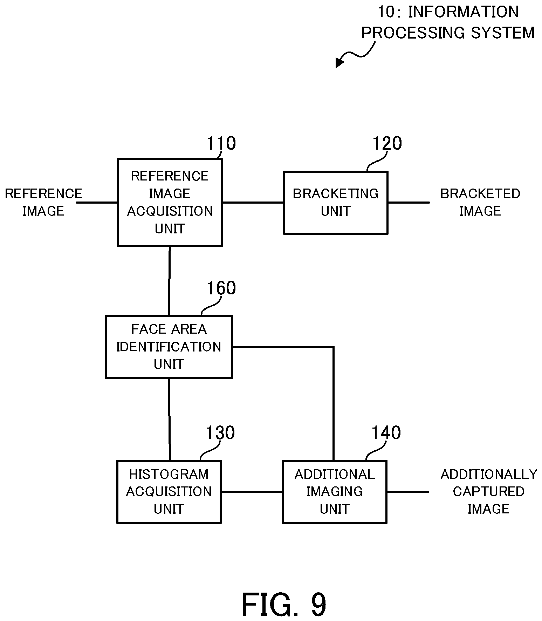

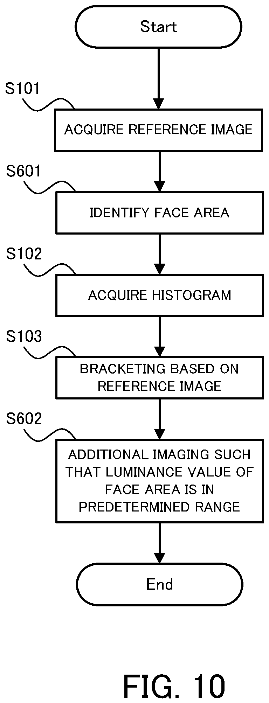

The information processing system 10 according to a sixth example embodiment will be described with reference to FIG. 9 and FIG. 10. The sixth example embodiment is partially different from the first to fifth example embodiments only in the configuration and operation, and may be the same as the first to fifth example embodiments in the other parts. For this reason, a part that is different from each of the example embodiments described above will be described in detail below, and a description of the other overlapping parts will be omitted as appropriate.

### (Functional Configuration)

First, a functional configuration of the information processing system 10 according to the sixth example embodiment will be described with reference to FIG. 9. FIG. 9 is a block diagram illustrating the functional configuration of the information processing system according to the sixth example embodiment. In FIG. 9, the same components as those illustrated in FIG. 2 carry the same reference numerals.

As illustrated in FIG. 9, the information processing system 10 according to the sixth example embodiment includes, as components for realizing the functions thereof, the reference image acquisition unit 110, the bracketing unit 120, the histogram acquisition unit 130, the additional imaging unit 140, and a face area identification unit 160. That is, the information processing system 10 according to the sixth example embodiment further includes the face area identification unit 160 in addition to the configuration in the first example embodiment already described (see FIG. 2). The face area identification unit 160 may be a processing block realized or implemented by the processor 11 (see FIG. 1), for example.

The face area identification unit 160 is configured to identify an area in which there is a face of the target captured by the camera 18 (hereinafter referred to as a "face area" as appropriate). The face area identification unit 160 may identify the face area of the target in the reference image acquired by the reference image acquisition unit 110. A specific method of identifying the face area is not particularly limited, and existing techniques/technologies may be employed as appropriate. Information about the face area identified by the face area identification unit 160 (e.g., information indicating a position of the face area) is configured to be outputted to the histogram acquisition unit 130 and the additional imaging unit 140. Therefore, the additional imaging unit 140 according to the sixth example embodiment, performs the additional imaging in view of the face area identified by the face area identification unit 160.

### (Flow of Operation)

Next, a flow of operation of the information processing system 10 according to the sixth example embodiment will be described with reference to FIG. 10. FIG. 10 is a flowchart illustrating a flow of an imaging operation of the information processing system according to the sixth example embodiment. In FIG. 10, the same steps as those illustrated in FIG. 3 carry the same reference numerals.

As illustrated in FIG. 10, when the operation by the information processing system 10 according to the sixth example embodiment is started, first, the reference image acquisition unit 110 acquires the reference image (step S101). The reference image acquired by the reference image acquisition unit 110 is outputted to the bracketing unit 120 and the face area identification unit 160.

Subsequently, the face area identification unit 160 identifies the face area of the target by using the reference target (step S601). The information about the face area identified by the face area identification unit 160 is outputted to the histogram acquisition unit 130 and the additional imaging unit 140.

Subsequently, the histogram acquisition unit 130 analyzes the reference image acquired by the reference image acquisition unit 110 and acquires the histogram of the reference image (step S102). At this time, the histogram acquisition unit 130 may acquire the histogram corresponding only to the face area. That is, the histogram limited to not the entire reference image, but the face area, may be acquired. The histogram of the reference image acquired by the histogram acquisition unit 130 is outputted to the additional imaging unit 140.

Subsequently, the bracketing unit 140 controls the camera 18 to perform the bracketing on the basis of the reference image acquired by the reference image acquisition unit 110 (step S103).

Subsequently, the additional imaging unit 140 performs the additional imaging on the basis of the histogram of the reference image acquired by the histogram acquisition unit 130. At this time, the additional imaging unit 140 performs the additional imaging such that the luminance value of the face area identified by the face area identification unit 160 is in a predetermined range (step S602). Specifically, the additional imaging is performed with the additional imaging set value at which the luminance value of the face area is in a predetermined range. The "predetermined range" herein is set in advance to indicate an appropriate range serving as the luminance value of the face area. The predetermined range may be set as such a range of the luminance value that authentication accuracy is improved when it is used for face recognition, for example.

### (Technical Effect)

Next, a technical effect obtained by the information processing system 10 according to the sixth example embodiment will be described.

As described in FIG. 9 and FIG. 10, in the information processing system 10 according to the sixth example embodiment, the face area of the target is identified, and the additional imaging is performed such that the luminance value of the face area is in a predetermined range. In this way, the image of the face of the target may be properly captured. Thus, for example, it is possible to capture an image suitable for the biometric authentication (i.e., face recognition) using the face image of the target.

### <Modified Example of Sixth Example Embodiment>

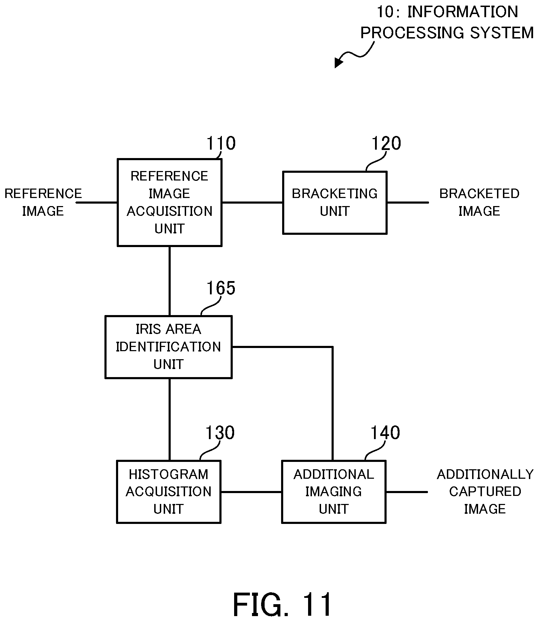

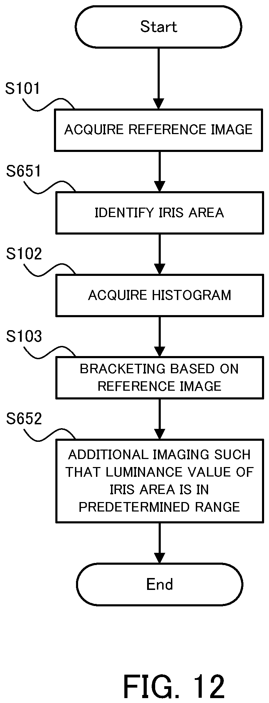

The information processing system 10 according to a modified example of the sixth example embodiment will be described with reference to FIG. 11 and FIG. 12. The modified example of the sixth form is partially different from the sixth example embodiment only in the configuration and operation, and may be the same as the first to sixth example embodiments in the other parts. For this reason, a part that is different from each of the example embodiments described above will be described in detail below, and a description of the other overlapping parts will be omitted as appropriate.

### (Functional Configuration)

First, a functional configuration of the information processing system 10 according to the modified example of the sixth example embodiment will be described with reference to FIG. 11. FIG. 11 is a block diagram illustrating the functional configuration of the information processing system according to the modified example of the sixth example embodiment. In FIG. 11, the same components as those illustrated in FIG. 9 carry the same reference numerals.

As illustrated in FIG. 11, the information processing system 10 according to the modified example of the sixth example embodiment includes, as components for realizing the functions thereof, the reference image acquisition unit 110, the bracketing unit 120, the histogram acquisition unit 130, the additional imaging unit 140, and an iris area identification unit 165. That is, the information processing system 10 according to the modified example of the sixth example embodiment includes the iris area identification unit 165, instead of the face area identification unit 160 in the configuration in the sixth example embodiment already described (see FIG. 9). The iris area identification unit 165 may be a processing block realized or implemented by the processor 11 (see FIG. 1), for example.

The iris area identification unit 165 is configured to identify an area in which there is an iris of the target captured by the cameras 18 (hereinafter referred to as an "iris area" as appropriate). The iris area identification unit 165 may identify the iris area of the in the reference image acquired by the reference image acquisition unit 110, for example. A specific method of identifying the iris area is not particularly limited, and existing techniques/technologies may be employed as appropriate. Information about the iris area identified by the iris area identification unit 165 (e.g., information indicating a position of the iris area) is configured to be outputted to the histogram acquisition unit 130 and the additional imaging unit 140. Therefore, the additional imaging unit 140 according to the modified example of the sixth example embodiment, performs the additional imaging in view of the iris area identified by the iris area identification unit 165.

### (Flow of Operation)

Next, a flow of operation of the information processing system 10 according to the modified example of the sixth example embodiment will be described with reference to FIG. 12. FIG. 12 is a flowchart illustrating a flow of an imaging operation of the information processing system according to the modified example of the sixth example embodiment. In FIG. 12, the same steps as those illustrated in FIG. 10 carry the same reference numerals.

As illustrated in FIG. 12, when the operation by the information processing system 10 according to a modified example of the sixth example embodiment is started, first, the reference image acquisition unit 110 acquires the reference image (step S101). The reference image acquired by the reference image acquisition unit 110 is outputted to the bracketing unit 120 and the face area identification unit 160.

Subsequently, the iris area identification unit 165 identifies the iris area of the target by using the reference target (step S651). The information about the iris area identified by the iris area identification unit 165 is outputted to the histogram acquisition unit 130 and the additional imaging unit 140.

Subsequently, the histogram acquisition unit 130 analyzes the reference image acquired by the reference image acquisition unit 110 and acquires the histogram of the reference image (step S102). At this time, the histogram acquisition unit 130 may acquire the histogram corresponding only to the iris area. That is, the histogram limited to not the entire reference image, but the iris area, may be acquired. The histogram of the reference image acquired by the histogram acquisition unit 130 is outputted to the additional imaging unit 140.

Subsequently, the bracketing unit 140 controls the camera 18 to perform the bracketing on the basis of the reference image acquired by the reference image acquisition unit 110 (step S103).

Subsequently, the additional imaging unit 140 performs the additional imaging on the basis of the histogram of the reference image acquired by the histogram acquisition unit 130. At this time, the additional imaging unit 140 performs the additional imaging such that the luminance value of the iris area identified by the iris area identification unit 165 is in a predetermined range (step S652). Specifically, the additional imaging is performed with the additional imaging set value at which the luminance value of the iris area is in a predetermined range. The "predetermined range" herein is set in advance to indicate an appropriate range serving as the luminance value of the iris area. The predetermined range may be set as such a range of the luminance value that the authentication accuracy is improved when it is used for iris recognition, for example.

### (Technical Effect)

Next, a technical effect obtained by the information processing system 10 according to the modified example of the sixth example embodiment will be described.

As described in FIG. 11 and FIG. 12, in the information processing system 10 according to the modified example of the sixth example embodiment, the iris area of the target is identified, and the additional imaging is performed such that the luminance value of the iris area is in a predetermined range. In this way, the image of the iris of the target may be properly captured. Thus, for example, it is possible to capture an image suitable for the biometric authentication (i.e., iris recognition) using the iris image of the target.

The sixth example embodiment and the modified example of the sixth example embodiment described above may be combined. Specifically, the information processing system 10 may include both the face area identification unit 160 and the iris area identification unit 165. In this instance, the information processing system 10 may separately include a camera for capturing the face of the target and a camera for capturing the iris of the target. The information processing system 10 may be configured to perform multi-modal authentication using the face and the iris of the target.

In the sixth example embodiment and the modified examples of the sixth example embodiment described above, the configuration of imaging the face of the target and the iris of the target is described. Even in a case where another part is imaged, the same configuration can be applied. Specifically, an area in which there is a part of the target serving as an imaging target is identified, and the additional imaging is performed such that the luminance value of the area is in a predetermined range, by which the same technical effect can be obtained. In this way, the authentication accuracy can be improved for authentication other than the face recognition and the iris recognition (e.g., behavioral biometrics, palmprint recognition, etc.).

### <Seventh Example Embodiment>

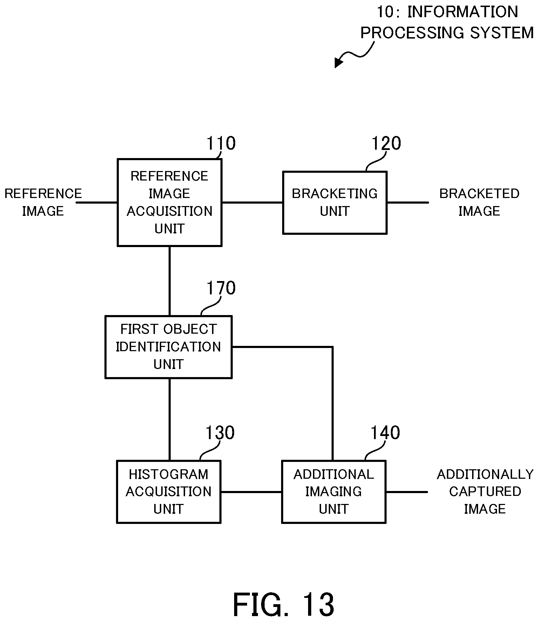

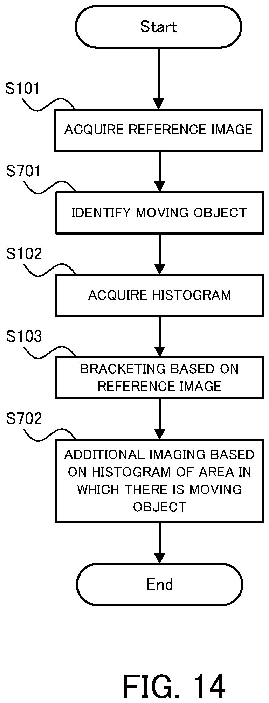

The information processing system 10 according to a seventh example embodiment will be described with reference to FIG. 13 and FIG. 14. The seventh example embodiment is partially different from the first to sixth example embodiments only in the configuration and operation, and may be the same as the first to sixth example embodiments in the other parts. For this reason, a part that is different from each of the example embodiments described above will be described in detail below, and a description of the other overlapping parts will be omitted as appropriate.

### (Functional Configuration)

First, a functional configuration of the information processing system 10 according to the seventh example embodiment will be described with reference to FIG. 13. FIG. 13 is a block diagram illustrating the functional configuration of the information processing system according to the seventh example embodiment. In FIG. 13, the same components as those illustrated in FIG. 2 carry the same reference numerals.

As illustrated in FIG. 13, the information processing system 10 according to the seventh example embodiment includes, as components for realizing the functions thereof, the reference image acquisition unit 110, the bracketing unit 120, the histogram acquisition unit 130, the additional imaging unit 140, and a first object identification unit 170. That is, the information processing system 10 according to the seventh example embodiment further includes the first object identification unit 170 in addition to the configuration in the first example embodiment already described (see FIG. 2). The first object identification unit 170 may be, for example, a processing block implemented by the above-described processor 11 (see FIG. 1).

The first object identification unit 170 is configured to identify a moving object. The first object identification unit 170 may identify an area in which there is the moving object in the reference image. The first object identification unit 170 may identify the area in which there is the moving object, for example, by using a difference between a plurality of time-series images including the reference image. A specific method of identifying the moving object is not particularly limited, and existing techniques/technologies may be employed as appropriate. Information about the object identified by the first object identification unit 170 (e.g., information indicating a position of the area in which there is the moving object) is outputted to the histogram acquisition unit 130 and the additional imaging unit 140. Therefore, the additional imaging unit 140 according to the seventh example embodiment, performs the additional imaging in view of the area identified by the first object identification unit 170.

### (Flow of Operation)

Next, a flow of operation of the information processing system 10 according to the seventh example embodiment will be described with reference to FIG. 14. FIG. 14 is a flowchart illustrating a flow of an imaging operation of the information processing system according to the seventh example embodiment. In FIG. 14, the same steps as those illustrated in FIG. 3 carry the same reference numerals.

As illustrated in FIG. 14, when the operation by the information processing system 10 according to the seventh example embodiment is started, first, the reference image acquisition unit 110 acquires the reference image (step S101). The reference image acquired by the reference image acquisition unit 110 is outputted to the bracketing unit 120 and the first object identification unit 170.

Subsequently, the first object identification unit 170 identifies the area in which there is the moving object in the reference image (step S701). The information about the area identified by the first object identifying unit 170 is outputted to the histogram acquisition unit 130 and the additional imaging unit 140.

Subsequently, the histogram acquisition unit 130 analyzes the reference image acquired by the reference image acquisition unit 110 and acquires the histogram of the reference image (step S102). At this time, the histogram acquisition unit 130 may acquire the histogram corresponding only to the area in which there is the moving object. That is, the histogram limited to not the entire reference image, but the area in which there is the moving object, may be acquired. The histogram of the reference image acquired by the histogram acquisition unit 130 is outputted to the additional imaging unit 140.

Subsequently, the bracketing unit 140 controls the camera 18 to perform the bracketing on the basis of the reference image acquired by the reference image acquisition unit 110 (step S103).

Subsequently, the additional imaging unit 140 performs the additional imaging on the basis of the histogram of the reference image acquired by the histogram acquisition unit 130. At this time, the additional imaging unit 140 performs the additional imaging on the basis of the histogram of the area in which there is the moving object (step S702). For example, as in the example in which the face area is used as described in the sixth example embodiment (see FIG. 14), the additional imaging unit 140 may perform the additional imaging such that the luminance value of the moving object is in a predetermined range. That is, the additional imaging may be performed, with such an additional imaging set value that the area in which there is the moving object has an appropriate luminance value.

After the moving object is identified, the area in which there is the face of the target may be identified, as in the sixth example embodiment. For example, an upper 25% area of the area in which there is the moving object, may be identified as the face area in which there is the face of the target.

### (Technical Effect)

Next, a technical effect obtained by the information processing system 10 according to the seventh example embodiment will be described.

As described in FIG. 13 and FIG. 14, in the information processing system10 according to the seventh example embodiment, the moving object is identified, and the additional imaging is performed on the basis of the histogram of the area in which there is the object. In this way, it is possible to perform more appropriate additional imaging by identifying the target in the image.

### <Eighth Example Embodiment>

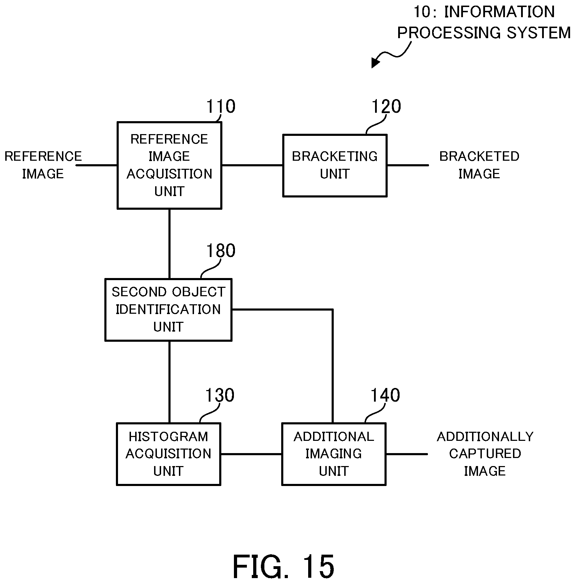

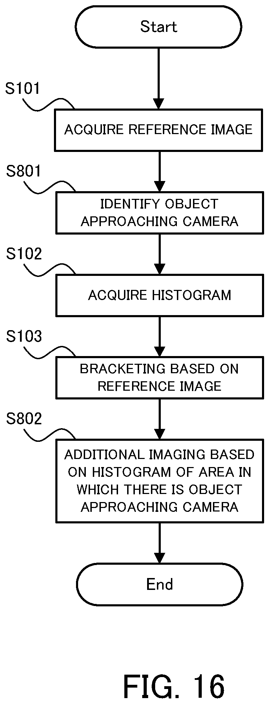

The information processing system 10 according to an eighth example embodiment will be described with reference to FIG. 15 and FIG. 16. The eighth example embodiment is partially different from the first to seventh example embodiments only in the operation, and may be the same as the first to seventh example embodiments in the other parts. For this reason, a part that is different from each of the example embodiments described above will be described in detail below, and a description of the other overlapping parts will be omitted as appropriate.

### (Functional Configuration)

First, a functional configuration of the information processing system 10 according to the eighth example embodiment will be described with reference to FIG. 15. FIG. 15 is a block diagram illustrating the functional configuration of the information processing system according to the eighth example embodiment. In FIG. 15, the same components as those illustrated in FIG. carry the same reference numerals.

As illustrated in FIG. 15, the information processing system 10 according to the eighth example embodiment includes, as components for realizing the functions thereof, the reference image acquisition unit 110, the bracketing unit 120, the histogram acquisition unit 130, the additional imaging unit 140, and a second object identification unit 180. That is, the information processing system 10 according to the eighth example embodiment further includes the second object identification unit 180 in addition to the configuration in the first example embodiment already described (see FIG. 2). The second object identification unit 180 may be realized or implemented by the processor 11 (see FIG. 1), for example.

The second object identification unit 180 is configured to identify an object approaching the camera 18. The second object identification unit 180 may identify an area in which there is the object approaching the camera 18 in the reference image. The second object identification unit 180 may identify the object approaching the camera, by using a plurality of time-series images including the reference image, for example. For example, an object whose size in the image gradually increases, may be identified as the object approaching the camera 18. A specific method of identifying the object approaching the camera 18 is not particularly limited, and existing techniques/technologies may be employed as appropriate. Information about the object identified by the second object identification unit 180 (e.g., information indicating a position of the area in which there is the object approaching the camera 18) is outputted to the histogram acquisition unit 130 and the additional imaging unit 140. Therefore, the additional imaging unit 140 according to the eighth example embodiment, performs the additional imaging in view of the area identified by the second object identification unit 180.

### (Flow of Operation)

Next, a flow of operation of the information processing system 10 according to the eighth example embodiment will be described with reference to FIG. 16. FIG. 16 is a flowchart illustrating a flow of an imaging operation of the information processing system according to the eighth example embodiment. In FIG. 16, the same steps as those illustrated in FIG. 3 carry the same reference numerals.

As illustrated in FIG. 16, when the operation by the information processing system 10 according to the eighth example embodiment is started, first, the reference image acquisition unit 110 acquires the reference image (step S101). The reference image acquired by the reference image acquisition unit 110 is outputted to the bracketing unit 120 and the second object identification unit 180.

Subsequently, the second object identification unit 180 identifies the area in which there is the object approaching the camera 18 in the reference image (step S801). The information about the area identified by the second object identifying unit 180 is outputted to the histogram acquisition unit 130 and the additional imaging unit 140.

Subsequently, the histogram acquisition unit 130 analyzes the reference image acquired by the reference image acquisition unit 110 and acquires the histogram of the reference image (step S102). At this time, the histogram acquisition unit 130 may acquire the histogram corresponding only to the area in which there is the object approaching the camera 18. That is, the histogram limited to not the entire reference image, but the area in which there is the object approaching the camera 18, may be acquired. The histogram of the reference image acquired by the histogram acquisition unit 130 is outputted to the additional imaging unit 140.

Subsequently, the bracketing unit 140 controls the camera 18 to perform the bracketing on the basis of the reference image acquired by the reference image acquisition unit 110 (step S103).

Subsequently, the additional imaging unit 140 performs the additional imaging on the basis of the histogram of the reference image acquired by the histogram acquisition unit 130. At this time, the additional imaging unit 140 performs the additional imaging on the basis of the histogram of the area in which there is the object approaching the camera 18 (step S802). For example, as in the example in which the face area is used as described in the sixth example embodiment (see FIG. 14), the additional imaging unit 140 may perform the additional imaging such that the luminance value of the object approaching the camera 18 is in a predetermined range. That is, the additional imaging may be performed, with such an additional imaging set value that the area in which there is the object approaching the camera 18 has an appropriate luminance value.

After the object approaching the camera 18 is identified, the area in which there is the face of the target may be identified, as in the sixth example embodiment. For example, an upper 25% area of the area in which there is the object approaching the camera 18, may be identified as the face area in which there is the face of the target.

### (Technical Effect)

Next, a technical effect obtained by the information processing system 10 according to the eighth example embodiment will be described.

As described in FIG. 15 and FIG. 16, in the information processing system 10 according to the eighth example embodiment, the object approaching the camera 18 is identified, and the additional imaging is performed on the basis of the histogram of the area in which there is the object. **In** this way, it is possible to perform more appropriate additional imaging by identifying the target in the image.

### <Ninth Example Embodiment>

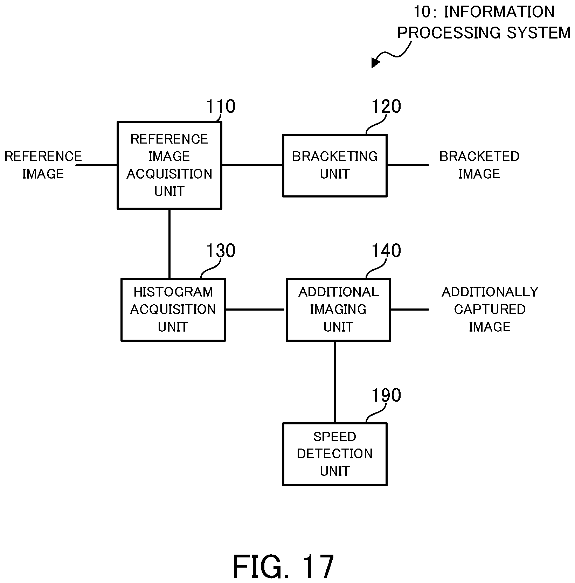

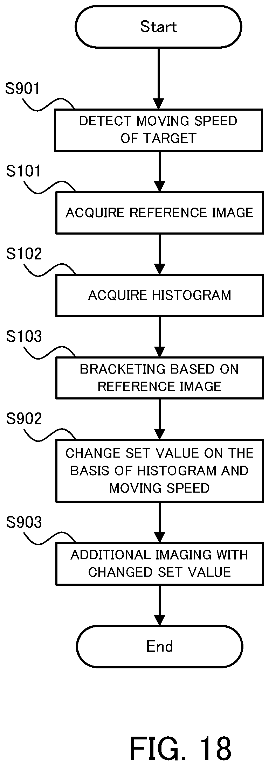

The information processing system 10 according to a ninth example embodiment will be described with reference to FIG. 17 and FIG. 18. The ninth example embodiment is partially different from the first to eighth example embodiments only in the configuration and operation, and may be the same as the first to eighth example embodiments in the other parts. For this reason, a part that is different from each of the example embodiments described above will be described in detail below, and a description of the other overlapping parts will be omitted as appropriate.

### (Functional Configuration)

First, a functional configuration of the information processing system 10 according to the ninth example embodiment will be described with reference to FIG. 17. FIG. 17 is a block diagram illustrating the functional configuration of the information processing system according to the ninth example embodiment. In FIG. 17, the same components as those illustrated in FIG. 2 carry the same reference numerals.

As illustrated in FIG. 17, the information processing system 10 according to the ninth example embodiment includes, as components for realizing the functions thereof, the reference image acquisition unit 110, the bracketing unit 120, the histogram acquisition unit 130, the additional imaging unit 140, and a speed detection unit 190. That is, the information processing system 10 according to the ninth example embodiment further includes the speed detection unit 190 in addition to the configuration in the first example embodiment already described (see FIG. 2). The speed detection unit 190 may be realized or implemented by the processor 11 (see FIG. 1), for example.

The speed detection unit 190 is configured to detect a moving speed of the target. The speed detection unit 190 may detect the moving speed of the target by using various sensors, or may detect the moving speed of the target by using the image captured by the camera 18. For example, the moving speed of the target may be detected from the difference between a plurality of time-series images. The moving speed of the target detected by the speed detection unit 190 is configured to be outputted to the additional imaging unit 140. Therefore, the additional imaging unit 140 according to the ninth example embodiment performs the additional imaging in view of the moving speed of the target.

### (Flow of Operation)

Next, a flow of operation of the information processing system 10 according to the ninth example embodiment will be described with reference to FIG. 18. FIG. 18 is a flowchart illustrating a flow of an imaging operation of the information processing system according to the ninth example embodiment. In FIG. 18, the same steps as those illustrated in FIG. 3 carry the same reference numerals.

As illustrated in FIG. 18, when the operation of the information processing system 10 according to the ninth example embodiment is started, first, the moving speed detection unit 190 detects the moving speed of the target (step S901). The moving speed of the target detected by the moving speed detection unit 190 is outputted to the additional imaging unit 140. Although the moving speed of the target is detected before the reference image is captured, the moving speed of the target may be detected after the reference image is captured.

Subsequently, the reference image acquisition unit 110 acquires the reference image (step S101). The reference image acquired by the reference image acquisition unit 110 is outputted to the bracketing unit 120 and the histogram acquisition unit 130.

Subsequently, the histogram acquisition unit 130 analyzes the reference image acquired by the reference image acquisition unit 110 and acquires the histogram of the reference image (step S102). The histogram of the reference image acquired by the histogram acquisition unit 130 is outputted to the additional imaging unit 140.

Subsequently, the bracketing unit 140 controls the camera 18 to perform the bracketing on the basis of the reference image acquired by the reference image acquisition unit 110 (step S103).

Subsequently, the additional imaging unit 140 changes the additional imaging set value on the basis of the histogram of the reference image acquired by the histogram acquisition unit 130 and the moving speed detected by the moving speed detection unit 190 (step S902). For example, when the moving speed of the target is high, the additional imaging unit 140 may set an exposure time to be shorter than that when the moving speed is low. Thereafter, the additional imaging unit 140 performs the additional imaging by using the changed additional imaging set value (i.e., the additional imaging set value that takes into account the histogram and the moving speed) (step S903).

### (Technical Effect)

Next, a technical effect obtained by the information processing system 10 according to the ninth example embodiment will be described.

As described in FIG. 17 and FIG. 18, in the information processing system 10 according to the ninth example embodiment, the moving speed of the target is detected, and the additional imaging is performed on the basis of the moving speed of the target and the histogram of the reference image. In this way, appropriate additional imaging may be performed in accordance with the moving speed of the target. Therefore, it is possible to suppress/reduce blurring caused by a high moving speed of the target, or the like, for example.

### <Tenth Example Embodiment>

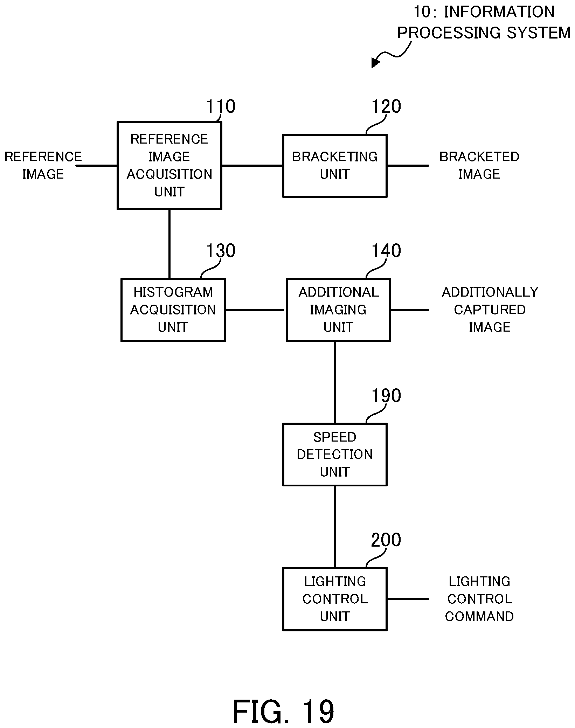

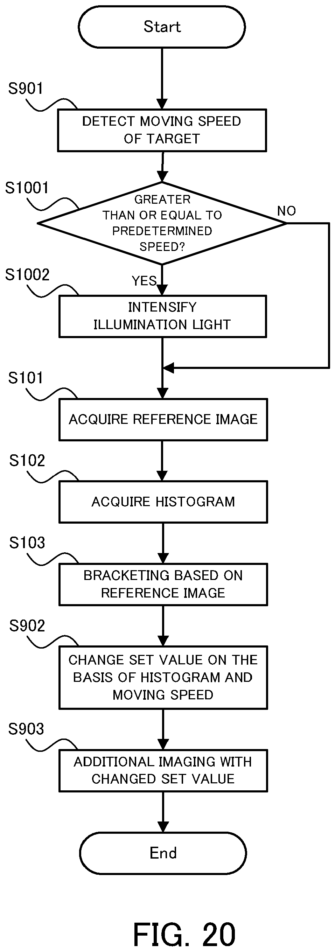

The information processing system 10 according to a tenth example embodiment will be described with reference to FIG. 19 and FIG. 20. The tenth example embodiment is partially different from the ninth example embodiment only in the configuration and operation, and may be the same as the first to ninth example embodiments in the other parts. For this reason, a part that is different from each of the example embodiments described above will be described in detail below, and a description of the other overlapping parts will be omitted as appropriate.

First, a functional configuration of the information processing system 10 according to the tenth example embodiment will be described with reference to FIG. 19. FIG. 19 is a block diagram illustrating the functional configuration of the n information processing system according to the tenth example embodiment. In FIG. 19, the same components as those illustrated in FIG. carry the same reference numerals. 17.

As illustrated in FIG. 19, the information processing system 10 according to the tenth example embodiment includes, as components for realizing the functions thereof, the reference image acquisition unit 110, the bracketing unit 120, the histogram acquisition unit 130, the additional imaging unit 140, the speed detection unit 190, and a lighting control unit 200. That is, the information processing system 10 according to the tenth example embodiment further includes the lighting control unit 200 in addition to the configuration in the ninth example embodiment already described (see FIG. 17). The lighting control unit 200 may be realized or implemented by the processor 11 (see FIG. 1), for example.

The lighting control unit 200 is configured to control intensity of illumination light applied to the target. For example, the lighting control unit 200 may control the intensity of the illumination light by changing quantity of light applied from lighting. In this instance, the lighting control unit 200 may control the lighting to increase the intensity of the illumination light that is already applied to the target, or may control the lighting to increase the intensity of the illumination light by turning on a power of the lighting that is off. Alternatively, the lighting control unit 200 may control the intensity of the illumination light by changing the number of lights to be illuminated in a lighting apparatus having a plurality of lights. Alternatively, the lighting control unit 200 may control the intensity of the illumination light by changing a direction in which the illumination light is applied (e.g., by turning the illumination light in a target direction, or out of the target direction). The lighting control unit 200 may be configured to control, for example, lighting built into the camera 18, lighting attached to the camera 18, lighting disposed in a different location from the camera 18, and the like. The lighting control unit 200 according to the present example embodiment controls the illumination light to be intensified in a case where the moving speed of the target is greater than or equal to a predetermined speed. The moving speed of the target may use one detected by the speed detection unit 190. The "predetermined speed" herein is a threshold for determining whether or not the moving speed of the target is high enough to shorten the exposure time in order to suppress/reduce blurring in the target.

### (Flow of Operation)

Next, a flow of operation of the information processing system 10 according to the tenth example embodiment will be described with reference to FIG. 20. FIG. 20 is a flowchart illustrating a flow of an imaging operation of the information processing system according to the tenth example embodiment. In FIG. 20, the same steps as those illustrated in FIG. 18 carry the same reference numerals.

As illustrated in FIG. 20, when the operation of the information processing system 10 according to the tenth example embodiment is started, first, the moving speed detection unit 190 detects the moving speed of the target (step S901). The moving speed of the target detected by the moving speed detection unit 190 is outputted to the additional imaging unit 140 and lighting control unit 190.

Subsequently, the lighting control unit 200 determines whether or not the moving speed of the target detected by the moving speed detection unit 190 is greater than or equal to a predetermined speed (step S1001). When the moving speed of the target is greater than or equal to the predetermined speed (the step S1001: YES), the lighting control unit 200 controls the lighting to intensify the illumination light applied to the target (step S1002). On the other hand, when the moving speed of the target is not greater than or equal to the predetermined speed (the step S1001: NO), the control in the step S1002e is omitted. That is, the illumination light applied to the target is not controlled to be intensified.

Subsequently, the reference image acquisition unit 110 acquires the reference image (step S101). The reference image acquired by the reference image acquisition unit 110 is outputted to the bracketing unit 120 and the histogram acquisition unit 130.

Subsequently, the histogram acquisition unit 130 analyzes the reference image acquired by the reference image acquisition unit 110 and acquires the histogram of the reference image (step S102). The histogram of the reference image acquired by the histogram acquisition unit 130 is outputted to the additional imaging unit 140.

Subsequently, the bracketing unit 140 controls the camera 18 to perform the bracketing on the basis of the reference image acquired by the reference image acquisition unit 110 (step S103).

Subsequently, the additional imaging unit 140 changes the additional imaging set value on the basis of the histogram of the reference image acquired by the histogram acquisition unit 130 and the moving speed detected by the moving speed detection unit 190 (step S902). Thereafter, the additional imaging unit 140 performs the additional imaging by using the changed additional imaging set value (i.e., the additional imaging set value that takes into account the histogram and the moving speed) (step S903).

### (Technical Effect)

Next, a technical effect obtained by the information processing system 10 according to the tenth example embodiment will be described.

As described in FIG. 19 and FIG. 20, in the information processing system 10 according to the tenth example embodiment, when the moving speed of the target is greater than or equal to the predetermined speed, the illumination light is controlled to be intensified. In this way, since the imaging environment is brightened in accordance with the moving speed of the target, the exposure time in the imaging may be set relatively short. Therefore, it is possible to suppress/reduce the occurrence of blurring or the like, even in a case where the moving speed of the target is high.

### <Eleventh Example Embodiment>

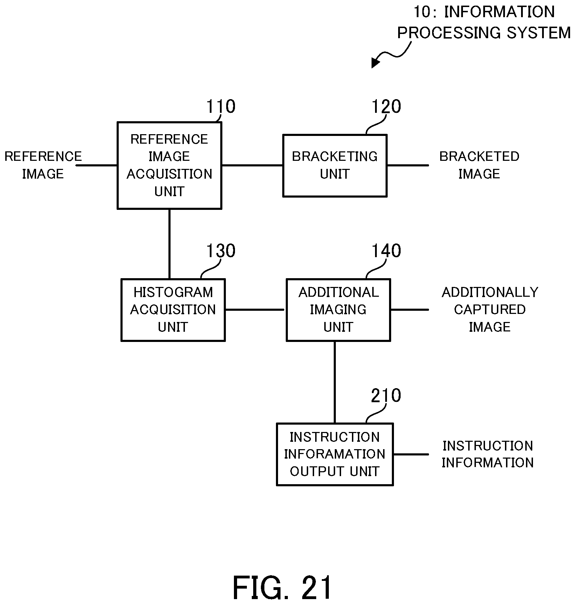

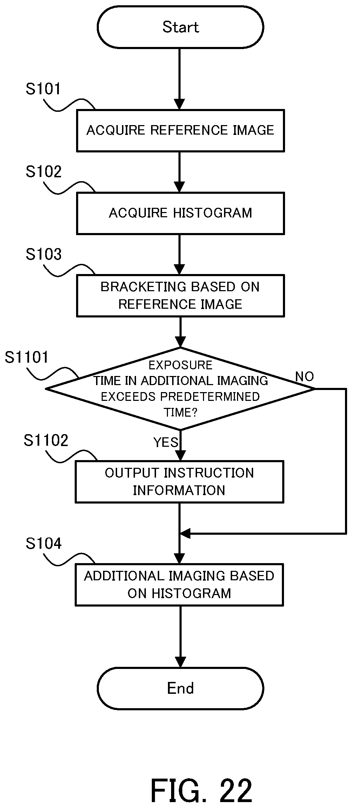

The information processing system 10 according to an eleventh example embodiment will be described with reference to FIG. 21 and FIG. 22. The eleventh example embodiment is partially different from the first to tenth example embodiments only in the configuration and operation, and may be the same as the first to tenth example embodiments in the other parts. For this reason, a part that is different from each of the example embodiments described above will be described in detail below, and a description of the other overlapping parts will be omitted as appropriate.

### (Functional Configuration)

First, a functional configuration of the information processing system 10 according to the eleventh example embodiment will be described with reference to FIG. 21. FIG. 21 is a block diagram illustrating the functional configuration of the information processing system according to the eleventh example embodiment. In FIG. 21, the same components as those illustrated in FIG. 2 carry the same reference numerals.

As illustrated in FIG. 21, the information processing system 10 according to the eleventh example embodiment includes, as components for realizing the functions thereof, the reference image acquisition unit 110, the bracketing unit 120, the histogram acquisition unit 130, the additional imaging unit 140, and an instruction information output unit 210. That is, the information processing system 10 according to the eleventh example embodiment further includes the instruction information output unit 210 in addition to the configuration in the first example embodiment already described (see FIG. 2). The instruction information outputting unit 210 may be realized or implemented by the processor 11 (see FIG. 1), for example.

The instruction information output unit 210 is configured to output instruction information for reducing the moving speed of the target. The instruction information output unit 210 may output a message to the target by using the output apparatus 16 described above (see FIG. 1). The information output unit 210 may display a message such as "Please walk a little slower" on a display, or may audio-output the message from a speaker.

Especially, the instruction information output unit 210 according to the present example embodiment outputs the instruction information when the exposure time in the additional imaging exceeds a predetermined time. The "predetermined time" herein is a threshold for determining whether or not the exposure time is long enough to cause a high possibility of blurring in the image. Whether or not the exposure time exceeds the predetermined time may be determined from information about the additional imaging set value set by the additional imaging unit 140, for example. Alternatively, it may be predicted and determined whether or not the exposure time exceeds the predetermined time, from a current imaging environment (e.g., brightness of an imaging place, etc.) or the histogram of the reference image.

### (Flow of Operation)

Next, a flow of operation of the information processing system 10 according to the eleventh example embodiment will be described with reference to FIG. 22. FIG. 22 is a flowchart illustrating a flow of an imaging operation of the information processing system according to the eleventh example embodiment. In FIG. 22, the same steps as those illustrated in FIG. 3 carry the same reference numerals.

As illustrated in FIG. 22, when the operation by the information processing system 10 according to the eleventh example embodiment is started, first, the reference image acquisition unit 110 acquires the reference image (step S101). The reference image acquired by the reference image acquisition unit 110 is outputted to the bracketing unit 120 and the histogram acquisition unit 130.

Subsequently, the histogram acquisition unit 130 analyzes the reference image acquired by the reference image acquisition unit 110 and acquires the histogram of the reference image (step S102). The histogram of the reference image acquired by the histogram acquisition unit 130 is outputted to the additional imaging unit 140.

Subsequently, the bracketing unit 140 controls the camera 18 to perform the bracketing on the basis of the reference image acquired by the reference image acquisition unit 110 (step S103).

Subsequently, the instruction information output unit 210 determines whether or not the exposure time in the additional imaging exceeds the predetermined time (step S1101). When the exposure time in the additional imaging exceeds the predetermined time (the step S1101: YES), the instruction information output unit 210 outputs the instruction information for reducing the speed of the target (step S1102). On the other hand, when the exposure time in the additional imaging does not exceed the predetermined time (the step S1101: NO), the step S1102 e may be omitted. That is, the instruction information output unit 210 may not output the instruction information for reducing the speed of the target.

Thereafter, the additional imaging unit 140 performs the additional imaging on the basis of the histogram of the reference image acquired by the histogram acquisition unit 130 (step S104). The additional imaging is preferably performed after confirming that target reduces the moving speed, but the additional imaging may be performed without confirming that the target reduces the moving speed.

### (Technical Effect)

Next, a technical effect obtained by the information processing system 10 according to the eleventh example embodiment will be described.

As described in FIG. 21 and FIG. 22, in the information processing system 10 according to the eleventh example embodiment, in a case where the exposure time in the additional imaging exceeds the predetermined time, the instruction information is outputted to the target to reduce the moving speed. In this way, it is considered that the output of the instruction information causes the moving speed of the target to be reduced. As a result, it is possible to suppress/reduce the occurrence of blurring or the like, even in a case where the exposure time exceeds the predetermined time.

### <Another Example Embodiment>

The above first to eleventh example embodiments exemplify that the additional imaging is performed on the basis of the histogram of the reference image, but the bracketing may be performed on the basis of the histogram of the reference image. That is, the imaging condition of the bracketing may be changed, as appropriate, in accordance with the histogram of the reference image. For example, a correction range for each time of the bracketing may be changed in accordance with the histogram of the reference image. More specifically, in a case where the bracketing with a normal correction width causes blackening or underexposure (or crashed shadows), the bracketing may be performed with an increased (e.g., doubled) correction width. In this way, by changing the imaging condition of the bracketing in accordance with the histogram of the reference image, an appropriate image may be captured even in the bracketing.

A processing method that is executed on a computer by recording, on a recording medium, a program for allowing the configuration in each of the example embodiments to be operated so as to realize the functions in each example embodiment, and by reading, as a code, the program recorded on the recording medium, is also included in the scope of each of the example embodiments. That is, a computer-readable recording medium is also included in the range of each of the example embodiments. Not only the recording medium on which the above-described program is recorded, but also the program itself is also included in each example embodiment.

The recording medium to use may be, for example, a floppy disk (registered trademark), a hard disk, an optical disk, a magneto-optical disk, a CD-ROM, a magnetic tape, a nonvolatile memory card, or a ROM. Furthermore, not only the program that is recorded on the recording medium and that executes processing alone, but also the program that operates on an OS and that executes processing in cooperation with the functions of expansion boards and another software, is also included in the scope of each of the example embodiments. In addition, the program itself may be stored in a server, and a part or all of the program may be downloaded from the server to a user terminal.

### <Supplementary Notes>

The example embodiments described above may be further described as, but not limited to, the following Supplementary Notes below.

### (Supplementary Note 1)

An information processing system according to Supplementary Note 1 is an information processing system including: a reference image acquiring unit that acquires a reference image; a bracketing unit that controls a camera to perform bracketing based on the reference image; a histogram acquiring unit that acquires a histogram of the reference image; and an additional imaging unit that controls the camera to perform additional imaging with a set value different from that of the bracketing imaging, on the basis of the histogram of the reference image.

### (Supplementary Note 2)

An information processing system according to Supplementary Note 2 is the information processing system according to Supplementary Note 1, further including a backlight determination unit that determines whether or not an imaging environment is backlight on the basis of the histogram of the reference image, wherein the additional imaging unit controls the camera to perform the additional imaging at a set value for backlight when the imaging environment is determined to be backlit, and controls the camera not to perform the additional imaging when the imaging environment is determined not to be backlit.

### (Supplementary Note 3)

An information processing system according to Supplementary Note 3 is the information processing system according to Supplementary Note 2, wherein the backlight determination unit determines that the imaging environment is backlit when there are two or more peaks whose value is greater than or equal to a predetermined value in the histogram of the reference image.

### (Supplementary Note 4)

An information processing system according to Supplementary Note 4 is the information processing system according to Supplementary Note 2 or 3, wherein the backlight determination unit determines a degree of the backlight on the basis of a shape of the histogram of the reference image when determining that the imaging environment is backlit, and the additional imaging unit changes the set value for the backlight on the basis of the degree of the backlight.

### (Supplementary Note 5)

An information processing system according to Supplementary Note 5 is the information processing system according to any one of Supplementary Notes 1 to 4, wherein the additional imaging unit controls the camera to capture a first additional image with a first set value and to capture a second additional image with a second set value that is different from the first set value.

### (Supplementary Note 6)

An information processing system according to Supplementary Note 6 is the information processing system according to any one of Supplementary Notes 1 to 5, further including a face area identification unit that identifies a face area in which there is a face of a target to be imaged by the camera, wherein the additional imaging unit changes the set value of the additional imaging such that a luminance value of the face area is in a predetermined range.

### (Supplementary Note 7)

An information processing system according to Supplementary Note 7 is the information processing system according to any one of Supplementary Notes 1 to 6, further including a first object identification unit that identifies a moving object, wherein the additional imaging unit changes the set value of the additional imaging, on the basis of the histogram of an area in which there is the moving object, in the reference image.

### (Supplementary Note 8)

An information processing system according to Supplementary Note 8 is the information processing system according to any one of Supplementary Notes 1 to 7, further including a second object identification unit that identifies an object approaching the camera, wherein the additional imaging unit changes the set value of the additional imaging on the basis of the histogram of an area in which there is the object approaching the camera.

### (Supplementary Note 9)

An information processing system according to Supplementary Note 9 is the information processing system according to any one of Supplementary Notes 1 to 8, further including a speed detection unit that detects a moving speed of the target imaged by the camera, wherein the additional imaging unit changes an exposure time of the camera included in the set value of the additional imaging, on the basis of the moving speed of the target.

### (Supplementary Note 10)

An information processing system according to Supplementary Note 10 is the information processing system according to Supplementary Note 9, further including a lighting control unit that intensifies illumination light applied to the target, in a case where the moving speed of the target is greater than or equal to a predetermined speed.

### (Supplementary Note 11)

An information processing system according to Supplementary Note 11 is the information processing system according to any one of Supplementary Notes 1 to 10, further including an instruction information output unit that outputs instruction information for reducing the moving speed of the target, in a case where an exposure time of the camera in the additional imaging exceeds a predetermined time.

### (Supplementary Note 12)

An information processing method according to Supplementary Note 12 is an information processing method that is executed by at least one computer, the information processing method including: acquiring a reference image; controlling a camera to perform bracketing based on the reference image; acquiring a histogram of the reference image; and controlling the camera to perform additional imaging with a set value different from that of the bracketing imaging, on the basis of the histogram of the reference image.

### (Supplementary Note 13)

A recording medium according to Supplementary Note 13 is a recording medium on which a computer program that allows at least one computer to execute an information processing method is recorded, the information processing method including: acquiring a reference image; controlling a camera to perform bracketing based on the reference image; acquiring a histogram of the reference image; and controlling the camera to perform additional imaging with a set value different from that of the bracketing imaging, on the basis of the histogram of the reference image.

### (Supplementary Note 14)

An information processing apparatus according to Supplementary Note 14 is an information processing apparatus including: a reference image acquiring unit that acquires a reference image; a bracketing unit that controls a camera to perform bracketing based on the reference image; a histogram acquiring unit that acquires a histogram of the reference image; and an additional imaging unit that controls the camera to perform additional imaging with a set value different from that of the bracketing imaging, on the basis of the histogram of the reference image.

### (Supplementary Note 15)

A computer program according to Supplementary Note 15 is a computer program that allows at least one computer to execute an information processing method, the information processing method including: acquiring a reference image; controlling a camera to perform bracketing based on the reference image; acquiring a histogram of the reference image; and controlling the camera to perform additional imaging with a set value different from that of the bracketing imaging, on the basis of the histogram of the reference image.

This disclosure is allowed to be changed, if desired, without departing from the essence or spirit of this disclosure which can be read from the claims and the entire specification. An information processing system, an information processing method, a recording medium, and a data structure with such changes are also intended to be within the technical scope of this disclosure.

### Description of Reference Codes

10 Information processing system
11 Processor
16 Output apparatus
18 Camera
110 Reference image acquisition unit
120 Bracketing unit
130 Histogram acquisition unit
140 Additional imaging unit
150 Backlight determination unit
160 Face area identification unit
165 Iris area identification unit
170 First object identification unit
180 Second object identification unit
190 Speed detection unit
200 Lighting control unit
210 Instruction information output unit

## Claims

1. An information processing system comprising:
a reference image acquiring unit that acquires a reference image;
a bracketing unit that controls a camera to perform bracketing based on the reference image;
a histogram acquiring unit that acquires a histogram of the reference image; and
an additional imaging unit that controls the camera to perform additional imaging with a set value different from that of the bracketing imaging, on the basis of the histogram of the reference image.

2. The information processing system according to claim 1, further comprising a backlight determination unit that determines whether or not an imaging environment is backlight on the basis of the histogram of the reference image, wherein
the additional imaging unit controls the camera to perform the additional imaging at a set value for backlight when the imaging environment is determined to be backlit, and controls the camera not to perform the additional imaging when the imaging environment is determined not to be backlit.

3. The information processing system according to claim 2, wherein the backlight determination unit determines that the imaging environment is backlit when there are two or more peaks whose value is greater than or equal to a predetermined value in the histogram of the reference image.

4. The information processing system according to claim 2 or 3, wherein
the backlight determination unit determines a degree of the backlight on the basis of a shape of the histogram of the reference image when determining that the imaging environment is backlit, and
the additional imaging unit changes the set value for the backlight on the basis of the degree of the backlight.

5. The information processing system according to any one of claims 1 to 4, wherein the additional imaging unit controls the camera to capture a first additional image with a first set value and to capture a second additional image with a second set value that is different from the first set value.

6. The information processing system according to any one of claims 1 to 5, further comprising a face area identification unit that identifies a face area in which there is a face of a target to be imaged by the camera, wherein
the additional imaging unit changes the set value of the additional imaging such that a luminance value of the face area is in a predetermined range.

7. The information processing system according to any one of claims 1 to 6, further comprising a first object identification unit that identifies a moving object, wherein
the additional imaging unit changes the set value of the additional imaging, on the basis of the histogram of an area in which there is the moving object, in the reference image.

8. The information processing system according to any one of claims 1 to 7, further comprising a second object identification unit that identifies an object approaching the camera, wherein
the additional imaging unit changes the set value of the additional imaging on the basis of the histogram of an area in which there is the object approaching the camera.

9. The information processing system according to any one of claims 1 to 8, further comprising a speed detection unit that detects a moving speed of the target imaged by the camera, wherein
the additional imaging unit changes an exposure time of the camera included in the set value of the additional imaging, on the basis of the moving speed of the target.

10. The information processing system according to claim 9, further comprising a lighting control unit that intensifies illumination light applied to the target, in a case where the moving speed of the target is greater than or equal to a predetermined speed.

11. The information processing system according to any one of claims 1 to 10, further comprising an instruction information output unit that outputs instruction information for reducing the moving speed of the target, in a case where an exposure time of the camera in the additional imaging exceeds a predetermined time.

12. An information processing method that is executed by at least one computer, the information processing method comprising:
acquiring a reference image;
controlling a camera to perform bracketing based on the reference image;
acquiring a histogram of the reference image; and
controlling the camera to perform additional imaging with a set value different from that of the bracketing imaging, on the basis of the histogram of the reference image.

13. A recording medium on which a computer program that allows at least one computer to execute an information processing method is recorded, the information processing method including:
acquiring a reference image;
controlling a camera to perform bracketing based on the reference image;
acquiring a histogram of the reference image; and
controlling the camera to perform additional imaging with a set value different from that of the bracketing imaging, on the basis of the histogram of the reference image.
